Europäisches Patentamt

European Patent Office

Office européen des brevets

(19)

(11) Veröffentlichungsnummer: **0 501 390 A1**

# (12) EUROPÄISCHE PATENTANMELDUNG

(21) Anmeldenummer: **92103095.3**

(22) Anmeldetag: **24.02.92**

(51) Int. Cl.⁵: **G01N 21/53**, G08G 1/09

(30) Priorität: **28.02.91 DE 4106289**

(43) Veröffentlichungstag der Anmeldung:
**02.09.92 Patentblatt 92/36**

(84) Benannte Vertragsstaaten:
**DE FR GB IT**

(71) Anmelder: **Bayerische Motoren Werke Aktiengesellschaft Patentabteilung AJ-3 Postfach 40 02 40 Petuelring 130 W-8000 München 40(DE)**

(72) Erfinder: **Hahn, Wolfgang Erdwegerstrasse 17 W-8061 Arnbach(DE)**

(54) **Prüfverfahren für die Sichtverhältnisse auf Fahrbahnen und Vorrichtung zur Durchführung des Verfahrens.**

(57) Bei einem Prüfverfahren für die Sichtverhältnisse auf Fahrbahnen werden folgende Verfahrensschritte angewandt:

a) Von einem außerhalb der Fahrbahn angeordneten Sender wird ein Testlichtstrahl in Richtung der Fahrbahn ausgesandt.

b) Das entstehende reflektierte Lichtsignal wird empfangen und hinsichtlich seiner Laufzeit und Intensität ausgewertet.

c) In Abhängigkeit von dieser Auswertung wird ein Fahrempfehlung ausgegeben.

FIG. 1

EP 0 501 390 A1

Die Erfindung bezieht sich auf ein Prüfverfahren für die Sichtverhältnisse auf Fahrbahnen sowie eine Vorrichtung zur Durchführung des Verfahrens.

Es sind derartige Prüfverfahren- und vorrichtungen bekannt, bei denen von einem Sender über eine definierte Prüfstrecke hinweg ein Lichtsignal zu einem in einer gewissen Entfernung stehenden Empfänger ausgesandt wird. Mit Hilfe einer derartigen, unter der Bezeichnung Transmissiometer bekannten Vorrichtung läßt sich erkennen, ob innerhalb der Prüfstrecke Nebel vorhanden ist.

Die bekannte Vorrichtung und das bekannte Verfahren sind relativ ungenau, da die Prüfstrecke in der Regel neben der Fahrbahn liegt und nur eine relativ grobe Aussage über die tatsächlichen Sichtverhältnisse auf der Fahrbahn möglich ist. Hinzu kommt ein grundsätzliches Problem einer derartigen Einrichtung. Das mit dem Empfänger aufgenommene Lichtsignal steht unter der Wirkung vielfältiger Einzelstreuvorgänge, die beispielsweise bei Nebel längs der Prüfstrecke auftreten. Das empfangene Lichtsignal enthält somit integriert die Information über die einzelnen Streuvorgänge. Es ist damit nicht möglich, eine Aussage über die lokale Dichteverteilung der Streuelemente zu erhalten. Bei diesen handelt es sich beispielsweise um Nebel- oder Wassertröpfchen.

Hinzu kommt der Einfluß der sich aus Fehlern der Lichtquelle selbst ergibt. Hierzu gehören der Totalausfall und Alterungsprozesse, denen zufolge entweder überhaupt kein Licht oder Licht mit sich ständig verringernder Intensität ausgesandt wird. Eine zuverlässige Aussage über die atmosphärischen Bedingungen auf der Prüfstrecke setzt somit auch eine Überprüfung der Lichtquelle hinsichtlich ihrer Funktionsfähigkeit und ihrer jeweiligen Ausgangsintensität voraus.

Der Erfindung liegt die Aufgabe zugrunde, ein Prüfverfahren der eingangs genannten Art zu schaffen, mit dem auf einfache und zuverlässige Weise eine präzise Aussage über die jeweiligen Sichtverhältnisse auf einer Fahrbahn gewonnen wird. Ferner ist es Aufgabe der Erfindung, dieses Verfahren mit einer Vorrichtung zu realisieren, die sich durch einen einfachen konstruktiven Aufbau auszeichnet.

Die Erfindung löst diese Aufgabe für das Prüfverfahren durch die kennzeichnenden Merkmale des Patentanspruchs 1, für die zugehörige Vorrichtung durch die kennzeichnenden Merkmale des Patentanspruchs 4.

Wesentlich für das erfindungsgemäße Prüfverfahren ist die Verwendung eines Testlichtstrahls, mit dem die Sichtbedingungen bestimmt werden. Aus der Intensität des reflektierten Lichtsignals läßt sich die Dichte und die Streueigenschaft beispielsweise von Nebel auf der Fahrbahn bestimmen und eine zutreffende Fahrempfehlung ausgeben. Die Fahrempfehlung wird sinnvollerweise mit Hilfe eines Kennfeldes oder einer anderen geeigneten Verarbeitungseinrichtung für das reflektierte Lichtsignal entnommen, in die das reflektierte Lichtsignal eingegeben wird.

Der Testlichtstrahl erfährt bis hin zum jeweiligen Reflektionsort eine Schwächung, der sich für das reflektierte Lichtsignal ebenfalls eine Schwächung anschließt. Jedes Wegelement zwischen dem Sender und dem Reflektionsort bewirkt somit eine zweifache Streuung und damit Schwächung des durchtretenden Lichts, die jedoch in beiden Fällen relativ dasselbe Ausmaß annimmt. Die Lage des jeweiligen Reflexionsortes läßt sich aus der Laufzeit des reflektierten Lichts zwischen seinem Aussenden und seinem Empfang eindeutig bestimmen.

Im Gegensatz zu dem eingangs genannten Verfahren ist bei ungünstigen Sichtbedingungen, beispielsweise Nebel die Intensität des reflektierten Lichtsignals besonders groß. Andererseits ist auch bei besten Sichtbedingungen aufgrund der Reflexion des ausgesandten Lichtsignals, die in jedem Fall beispielsweise auf der Fahrbahn, stattfindet, die ordnungsgemäße Funktion des Lichtsenders sichergestellt. Da der jeweilige Reflexionsort eindeutig bestimmbar ist, läßt sich auch der räumliche Verlauf einer atmosphärischen Beeinträchtigung in der jeweiligen Prüfstrecke zwischen dem Reflektionsort und dem Sender bzw. Empfänger zweifelsfrei bestimmen. Da insbesondere bei schlechten atmosphärischen Bedingungen eine Vielzahl von Reflexionsorten mit unterschiedlichem Abstand vom Sender/Empfänger vorliegt, läßt sich damit ein lückenloses Bild der Sichtbedingungen auf bzw. in unmittelbarer Nähe der Fahrbahn gewinnen.

Vorteilhafte Ausgestaltungen des erfindungsgemäßen Verfahrens ergeben sich aus den Patentansprüchen 2 und 3. Dabei bestehen die Vorteile der Merkmale des Patentanspruchs 2 darin, Erfahrungen aus der Verwendung von monochromatischem Licht, wie sie beispielsweise im Rahmen von Laser-Abstands-Meßeinrichtungen für Kraftfahrzeuge vorhanden sind, zu nutzen. Die Vorteile des Patentanspruchs 3 bestehen darin, Auswirkungen der natürlichen Beleuchtung auf die Sichtverhältnisse zu berücksichtigen. Tritt beispielsweise bei Tag Nebel auf, kann aufgrund des unterschiedlichen Kontrastes als Fahrempfehlung nur eine wesentlich geringere Fahrzeuggeschwindigkeit ausgesprochen werden, als wenn der Nebel bei Nacht vorliegt.

Die im Patentanspruch 4 beschriebene Vorrichtung zur Durchführung des erfindungsgemäßen Verfahrens läßt sich kompakt aufbauen und beansprucht nur wenig Raum.

Die Anordnung dieser Vorrichtung kann an verschiedenen Stellen erfolgen. So ist es beispielsweise möglich, Sender und Empfänger von einer Brücke oder Überführung aus auf die Fahrbahn wirken zu lassen. Demgegenüber ergibt sich eine genauere Aussage über die tatsächlich auf der Fahrbahn herrschenden Sichtbedingungen, wenn die Baueinheit wie im Patentanspruch 5 beschrieben angeordnet ist. Die Anordnung einer Warnbake bietet darüber hinaus den Vorteil, die Erfindung ohne Eingriff in das Straßenbild zu realisieren.

Schließlich kann bei Anwendung der Merkmale, wie sie im Patentanspruch 6 angegeben sind, die von verschiedenen Empfängern bzw. deren Auswerteeinrichtungen gelieferte Information zentral verarbeitet und in eine für bestimmte Streckenabschnitte wirksame Fahrempfehlung umgesetzt werden. Diese Fahrempfehlung kann mit Hilfe eines Rundfunksenders oder dgl., der nur für die Kraftfahrzeuge empfangen werden kann, die sich innerhalb dieses Straßenabschnittes befinden bzw. sich diesem Straßenabschnitt nähern, weitergegeben werden. Ferner ist es möglich, mit Hilfe einer geeigneten optischen Einrichtung, die beispielsweise ebenfalls innerhalb der Warnbaken untergebracht ist, die Fahrempfehlung in Form eines optischen Signals weiterzugeben. Anstelle von Auswerteeinrichtungen, die jedem Sender separat zugeordnet sind, kann auch mit Hilfe einer zentralen Auswerteeinheit, beispielsweise ebenfalls in der Zentrale, die Ausgabe der Fahrempfehlung erfolgen.

In der Zeichnung ist anhand von verschiedenen Figuren und Diagrammen die Erfindung näher erläutert. Es zeigen

Fig. 1 ein Schaubild zur prinzipiellen Erläuterung des erfindungsgemäßen Verfahrens

Fig. 2 den Verlauf der Intensität des bei dem Verfahren von Fig. 1 ausgesandten und reflektierten Lichtsignals und

Fig. 3 eine Entscheidungstabelle für die Ausgabe der jeweils richtigen Fahrempfehlung.

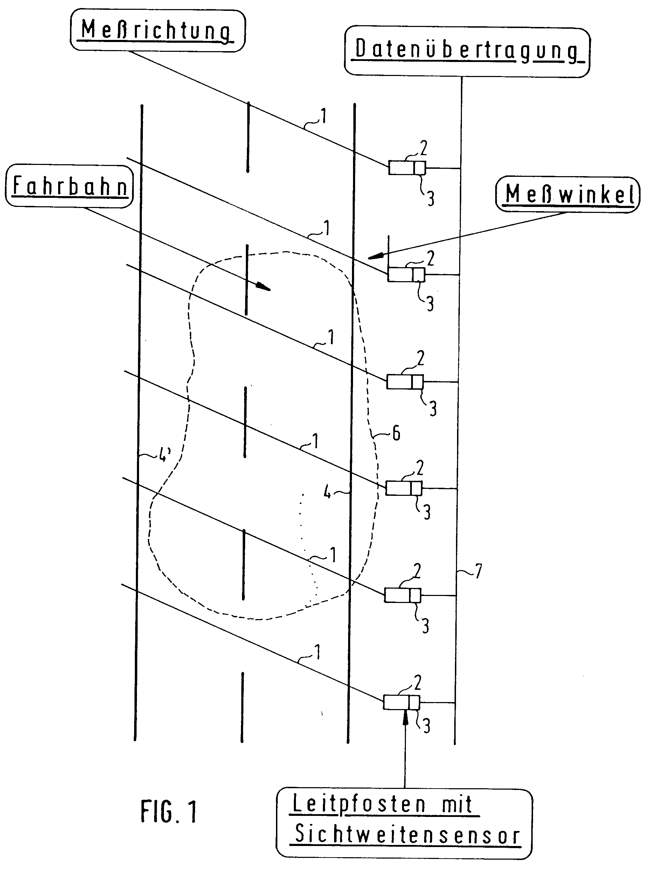

Bei der Anordnung von Fig. 1 wird von mehreren Sendern jeweils ein Testlichtstrahl 1 von einer Laserlichtquelle 2 ausgesandt. Die Sender sind in Warnbaken 3 eingebaut, die längs einer Fahrbahn 4 angeordnet sind. Der Testlichtstrahl ist jeweils gegen die Fahrbahn geneigt und trifft etwa am gegenüberliegenden Fahrbahnrand 4' auf die Fahrbahn. Mit Hilfe eines ebenfalls in den Warnbaken 3 eingebauten Empfängers wird der reflektierte Lichtstrahl aufgenommen und hinsichtlich seiner Laufzeit und seiner Intensität mit Hilfe einer nicht dargestellten Auswerteeinheit analysiert.

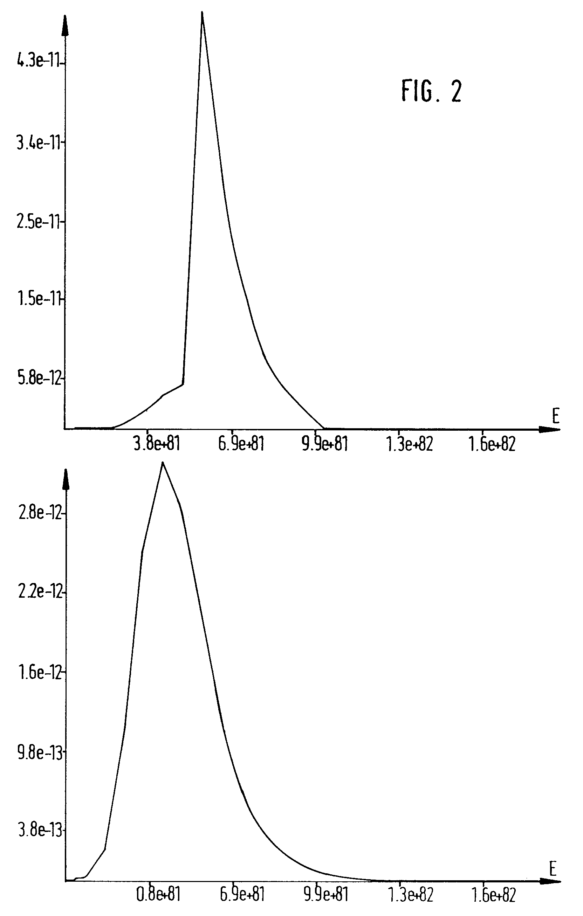

Der Testlichtstrahl 1 trifft im angenommenen Fall auf ein Nebelfeld 6, das auf der Fahrbahn liegt und sich für einen Fahrzeugbenutzer durch Reduktion der Sichtweite auf beispielsweise 50 Meter auswirkt. Durch das Nebelfeld wird ein reflektiertes Lichtsignal erzeugt, das den im unteren Teil von Fig. 2 dargestellten Intensitätsverlauf zeigt. Für die längs des vom Testlichtstrahl zurückgelegten Wegs reflektierten Lichtsignal ergibt sich zunächst ein steiler Anstieg im Nahbereich, d.h. bis in einem Abstand von etwa 10 Meter von der jeweiligen Warnbake, dem sich nach einem Maximum bei etwa 12 Meter ein Abfall des reflektierten Lichtsignals anschließt.

Zum Vergleich ist im oberen Teil von Fig. 2 der Intensitätsverlauf gegenübergestellt, der sich bei einwandfreien Sichtbedingungen ergibt. Das reflektierte Lichtsignal besitzt dann nur noch im Abstand von ca. 50 Meter eine von Null verschiedene Intensität. Diese ist bedingt durch die Reflexion des Testlichtstrahls bei Auftreffen auf die Fahrbahn. (Zur Erklärung: e-11/e + 01 bedeutet 100 exp (-11)- /10exp( + 01).

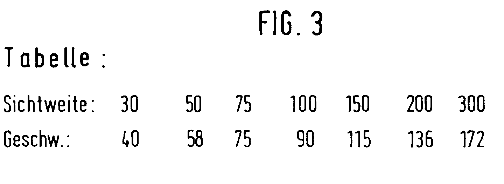

Es ist ohne weiteres ersichtlich, daß sich aus dem Intensitätsverlauf des reflektierten Lichtsignals eine sichere Aussage über die Sichtbedingungen gewinnen läßt. In einer Zentrale, die mit den Warnbaken 3 über eine gemeinsame Datenleitung 7 verbunden ist, läßt sich dann eine Fahrempfehlung gewinnen, die beispielsweise ebenfalls mit Hilfe der Warnbake bzw. darin angeordneten Signalisiereinrichtungen als optisches Warnsignal abgegeben wird. Es kann sich dabei um ein Blinksignal mit einer der Sichtbeeinträchtigung proportionalen Frequenz handeln. Beispiele für eine derartige Geschwindigkeitsempfehlung sind in der in Fig. 3 angegebenen Tabelle zu finden. Die Fahrempfehlung wird in Form einer Geschwindigkeitsempfehlung ausgegeben, die sich beispielsweise bei einer Sichtweite von 30 Metern auf 40 km/h beläuft.

Mit Hilfe eines nicht dargestellten Umgebungshelligkeitssensors, der beispielsweise zusätzlichen in einer der dargestellten Warnbaken angeordnet ist, läßt sich auch der Einfluß der ggf. vorhandenen natürlichen Beleuchtung auf die Sichtverhältnisse berücksichtigen. Es kann dann beispielsweise bei angenommen gleicher Nebeldichte bei Tag eine andere Fahrempfehlung als bei Nacht ausgegeben werden. Konkret bedeutet dies beispielsweise bei Nacht eine Verminderung der empfohlenen Fahrgeschwindigkeit um 25%.

**Patentansprüche**

1. Prüfverfahren für die Sichtverhältnisse auf Fahrbahnen, gekennzeichnet durch folgende Verfahrensschritte

a) von einem außerhalb der Fahrbahn angeordneten Sender wird ein Testlichtstrahl in Richtung der Fahrbahn ausgesandt,

b) das entstehende reflektierte Lichtsignal wird empfangen und hinsichtlich seiner Laufzeit und Intensität ausgewertet und

c) in Abhängigkeit von dieser Auswertung wird eine Fahrempfehlung ausgegeben.

2. Prüfverfahren nach Anspruch 1, dadurch gekennzeichnet, daß der Testlichtstrahl ein monochromatischer Lichtstrahl ist.

3. Prüfverfahren nach Anspruch 1 oder 2, dadurch gekennzeichnet, daß zusätzlich das Ausgangssignal eines Umgebungshelligkeitssensors ausgewertet wird.

4. Vorrichtung zur Durchführung des Prüfverfahrens nach einem der Ansprüche 1 bis 3, dadurch gekennzeichnet, daß der Sender und der Empfänger für den Testlichtstrahl eine räumliche Baueinheit bilden.

5. Vorrichtung nach Anspruch 4, dadurch gekennzeichnet, daß die Baueinheit in einer am Fahrbahnrand stehenden Warnbarke angeordnet ist.

6. Vorrichtung nach Anspruch 4 oder 5, dadurch gekennzeichnet, daß mehrere Baueinheiten längs der Fahrbahn angeordnet und mit einer Zentrale verbunden sind, die die Ausgabe der Fahrempfehlung steuert.

**Meßrichtung**

**Datenübertragung**

**Fahrbahn**

**Meßwinkel**

**Leitpfosten mit Sichtweitensensor**

FIG. 1

FIG. 2

# FIG. 3

Tabelle :

| Sichtweite: | 30 | 50 | 75 | 100 | 150 | 200 | 300 |
|---|---|---|---|---|---|---|---|
| Geschw.: | 40 | 58 | 75 | 90 | 115 | 136 | 172 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 033 870 (DEUTSCHE FORSCHUNGS- UND VERSUCHSANSTALT FÜR LUFT- UND RAUMFAHRT E.V.) <br> * Seite 1 * <br> --- | 1-4 | G01N21/53 <br> G08G1/09 |
| Y | EP-A-0 312 788 (DAIMLER-BENZ AG) <br> * Spalte 3, Zeile 16 - Spalte 4, Zeile 38; Anspruch 8 * <br> --- | 1-4 | |
| A | DE-A-2 223 230 (ELTRO GMBH) <br> * Seite 5, Zeile 1 - Zeile 13; Abbildung 1 * <br> --- | 4-6 | |
| A | MESURES REGULATION AUTOMATISME. <br> Bd. 51, Nr. 3, März 1986, PARIS FR <br> Seiten 39 - 44; <br> J.-F. PEYRUCAT: 'Autoroutes et brouillard : limiter les risques' <br> * das ganze Dokument * <br> --- | 1,4 | |
| A | STRASSENVERKEHRSTECHNIK <br> Bd. 6, 1970, DE <br> Seiten 194 - 195; <br> W. VOSBERG: 'Automatische Warnanlage für örtlich begrenzte Nebelfelder' <br> * das ganze Dokument * <br> --- | 1,4 | RECHERCHIERTE SACHGEBIETE (Int. Cl.5) <br><br> G01N <br> G08G |
| A | STRASSENVERKEHRSTECHNIK <br> Bd. 5, 1974, DE <br> Seiten 156 - 165; <br> F.FRÜNGEL ET AL.: 'Nebelwarngeräte für den Strassenverkehr' <br> * das ganze Dokument * <br><br> ----- | 1,4 | |

Der vorliegende Recherchenbericht wurde für alle Patentansprüche erstellt

| Recherchenort | Abschlußdatum der Recherche | Prüfer |
|---|---|---|
| BERLIN | 17 JUNI 1992 | BRISON O.P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)